# EUROPEAN PATENT APPLICATION

(11) **EP 4 607 152 A2**
(43) Date of publication of application: **27.08.2025**
(21) Application number: 25154909.3
(22) Date of filing: 30.01.2025
(51) Int. Cl.: G01C 23/00, G08G 5/21, G08G 5/32

(54) **METHODS AND SYSTEMS FOR DECONFLICTING GRAPHICS LAYERS**

(30) Priority: 22.02.2024 US 202418584497
(71) Applicant: Honeywell International Inc., Charlotte, NC 28202 (US)
(72) Inventor: MILMOE, Ryan, Charlotte, 28202 (US); FEYEREISEN, Thea, Charlotte, 28202 (US); HE, Gang, Charlotte, 28202 (US)
(74) Representative: Lucas, Peter Lawrence

(57) **Abstract**

Aircraft systems and methods are provided for presenting multiple different graphics layers on a navigational map. One method involves analyzing an upper layer of the different graphics layers to identify a region of interest overlapping at least a portion of a lower layer of the different graphics layers, analyzing the portion of the lower layer to identify one or more objects depicted in the lower layer, mapping a first object of the one or more objects depicted in the lower layer to a second object in the upper layer, and modifying presentation of the second object in the upper layer when a first set of one or more attributes associated with the first object in the lower layer match a second set of one or more attributes associated with the second object in the upper layer.

## Description

### TECHNICAL FIELD

The subject matter described herein relates generally to vehicle systems, and more particularly, embodiments of the subject matter relate to aircraft systems and related displays for presenting multiple different graphics layers on a navigational map.

### BACKGROUND

Aircraft are typically operated in accordance with predefined routes or procedures, particularly in the vicinity of an airport or within other congested airspaces. Published aeronautical charts, such as, for example, Instrument Approach Procedure (IAP) charts, Standard Terminal Arrival (STAR) charts or Terminal Arrival Area (TAA) charts, Standard Instrument Departure (SID) routes, Departure Procedures (DP), terminal procedures, approach plates, and the like, depict and describe the procedures for operating aircraft at or in the vicinity of various airports, runways, or other landing and/or departure locations. These charts graphically illustrate and describe the specific procedure information and instructions (e.g., minimum descent altitudes, minimum runway visual range, final course or heading, relevant radio frequencies, missed approach procedures) to be followed or otherwise utilized by a pilot for executing a particular aircraft procedure. These charts are typically provided by a governmental or regulatory organization, such as, for example, the Federal Aviation Administration in the United States.

Standard operating procedures (SOPs) or crew resource management (CRM) protocols often require that a pilot review (or brief) an aircraft procedure before attempting to execute that procedure. For example, the SOP or CRM protocol may dictate that the pilot review the approach procedure prior to or just after the top of descent point, or in any event, prior to reaching the terminal area and beginning the approach. In some situations, the pilot may also be required to review a subset of the procedure information for the approach procedure prior to final approach (e.g., prior reaching the final approach fix and/or prior to the minimum descent altitude).

Traditionally a pilot was required to review the procedure off the paper chart, which distracts the pilot from any other visual tasks that the pilot may need to perform (e.g., a concurrent visual monitoring requirement) and requires that the pilot locate the appropriate procedure information on the paper chart. Electronic displays in many modern flight deck displays (or cockpit displays) are eliminating the need to maintain paper charts for the various procedures that a pilot may need to execute. However, the size and/or number of the electronic displays inside an aircraft cockpit is often limited due to the number of instruments and human-machine interface elements inside the cockpit (e.g., joysticks, knobs, buttons, and the like) along with the need for the pilot to have an unobstructed view outside the aircraft. Furthermore, some of the display area on the electronic display may be utilized or reserved for other processes (e.g., primary flight displays, synthetic vision displays, vertical situation displays, flight management windows, and the like). As a result, it can be difficult to display all of the procedure information for operating the aircraft on an electronic display in a clear and uncluttered manner. Accordingly, it is desirable to improve situational awareness and reduce the workload on the pilot attempting to brief a procedure to be flown while concurrently operating the aircraft. Other desirable features and characteristics will become apparent from the subsequent detailed description and the appended claims, taken in conjunction with the accompanying drawings and this background.

### BRIEF SUMMARY

Systems and methods are provided for presenting multiple different graphics layers on a navigational map by deconflicting and decluttering objects common to overlapping layers. One method involves analyzing an upper layer of the different graphics layers to identify a region of interest overlapping at least a portion of a lower layer of the different graphics layers, analyzing the portion of the lower layer to identify one or more objects depicted in the lower layer, mapping a first object of the one or more objects depicted in the lower layer to a second object in the upper layer, and modifying presentation of the second object in the upper layer when a first set of one or more attributes associated with the first object in the lower layer match a second set of one or more attributes associated with the second object in the upper layer.

An apparatus for a computer-readable medium is also provided. The computer-readable medium has computer-executable instructions stored thereon that, when executed by a processing system, are configurable to cause the processing system to analyze an upper layer of a plurality of different graphics layers concurrently presented on a display device to identify a region of interest overlapping at least a portion of a lower layer of the different graphics layers, analyze the portion of the lower layer to identify one or more objects depicted in the lower layer, map a first object of the one or more objects depicted in the lower layer to a second object in the upper layer, and modify presentation of the second object in the upper layer when a first set of one or more attributes associated with the first object in the lower layer match a second set of one or more attributes associated with the second object in the upper layer.

A system is also provided that includes a procedure database maintaining a raster image for an aircraft procedure, a flight management system (FMS) to maintain a flight plan for an aircraft, a display device, and a processing system coupled to the display device, the FMS and the procedure database. The processing system is configurable to provide a graphics layer deconfliction service that analyzes a flight plan graphics layer to identify a region of interest overlapping at least a portion of the raster image concurrently presented within a procedure chart graphics layer on the display device, analyzes the portion of the procedure chart graphics layer to identify a first object depicted in the raster image, maps the first object depicted in the raster image to a second object in the flight plan graphics layer, and modifies presentation of the second object in the flight plan graphics layer when a first set of one or more attributes associated with the first object in the raster image match a second set of one or more attributes associated with the second object in the flight plan graphics layer.

This summary is provided to describe select concepts in a simplified form that are further described in the Detailed Description. This summary is not intended to identify key or essential features of the claimed subject matter, nor is it intended to be used as an aid in determining the scope of the claimed subject matter.

### BRIEF DESCRIPTION OF DRAWINGS

Exemplary embodiments of the subject matter of the present disclosure will hereinafter be described in conjunction with the following drawing figures, wherein like numerals denote like elements, and wherein:
FIG. 1 is a block diagram of a system for an aircraft in accordance with one or more exemplary embodiments;
FIG. 2 is a flow diagram of a graphics layer deconfliction process suitable for implementation in connection with the aircraft system of FIG. 1 in one or more exemplary embodiments; and
FIGS. 3-7 depicts exemplary states of navigational map graphical user interface (GLTI) displays suitable for presentation in connection with one or more exemplary implementations of the graphics layer deconfliction process of FIG. 2.

### DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to systems and methods for decluttering graphical user interface (GUI) displays, such as a lateral navigational map GUI display, by deconflicting different graphics layers that are selected, designated or otherwise configured for concurrent presentation. As described in greater detail below, in exemplary implementations, to declutter a GUI display and provide better visibility of information presented in a lower graphics layer, overlapping portions of different graphics layers area analyzed to identify respective objects or other graphical elements contained in the respective graphics layers. The objects or other graphical elements depicted in a lower graphics layer are mapped or otherwise attempted to be matched to corresponding objects or other graphical elements to be depicted in an upper graphics layer at or within a threshold distance of those corresponding objects or other graphical elements depicted in a lower graphics layer.

As described in greater detail below, presentation of an object in an upper graphics layer is modified depending on whether or not a set of one or more attributes associated with the object in the upper graphics layer match or otherwise correspond to a corresponding set of one or more attributes associated with an object in the lower graphics layer. For example, when the attributes of an object identified within an upper graphics layer match a corresponding object identified within the lower graphics layer, a visibility attribute associated with the object in the upper graphics layer may be automatically adjusted while the lower graphics layer is actively displayed to designate that object as invisible or hidden such that the matched object is not rendered within the upper graphics layer to declutter the display and improve visibility of the matching object in the lower graphics layer. On the other hand, when the attributes of an object identified within an upper graphics layer conflict with or otherwise fail to match those of a corresponding object identified within the lower graphics layer, the location, the color, the transparency and/or other display attributes associated with the object in the in the upper graphics layer may be automatically adjusted such that the matched object is rendered within the upper graphics layer in a manner that provides increased situational awareness with respect to the mismatch to visually alert a user of a potential conflict with respect to a common object concurrently presented within the different graphics layers. It should be appreciated that the subject matter described herein is not limited to any particular manner of modifying presentation of an object to declutter a GUI display or alternatively enhance situational awareness of a potential conflict between different graphics layers with respect to a common object.

For purposes of explanation, the subject matter is described herein primarily in the context of deconflicting different graphics layers to be presented on a lateral navigational map GUI display (or LNAV display) depicted on a flight deck display, an electronic flight bag (EFB) or other cockpit display onboard an aircraft in an aviation context. That said, it should be appreciated the subject matter is not limited to any particular type of navigational map or any particular type of GUI display, and furthermore, that the subject matter described herein is not necessarily limited to use with aircraft or any other particular type of vehicle, system or application, and may be similarly utilized in other applications, systems or environments, including, but not limited to use with other types of vehicles (e.g., automobiles, marine vessels, trains, etc.).

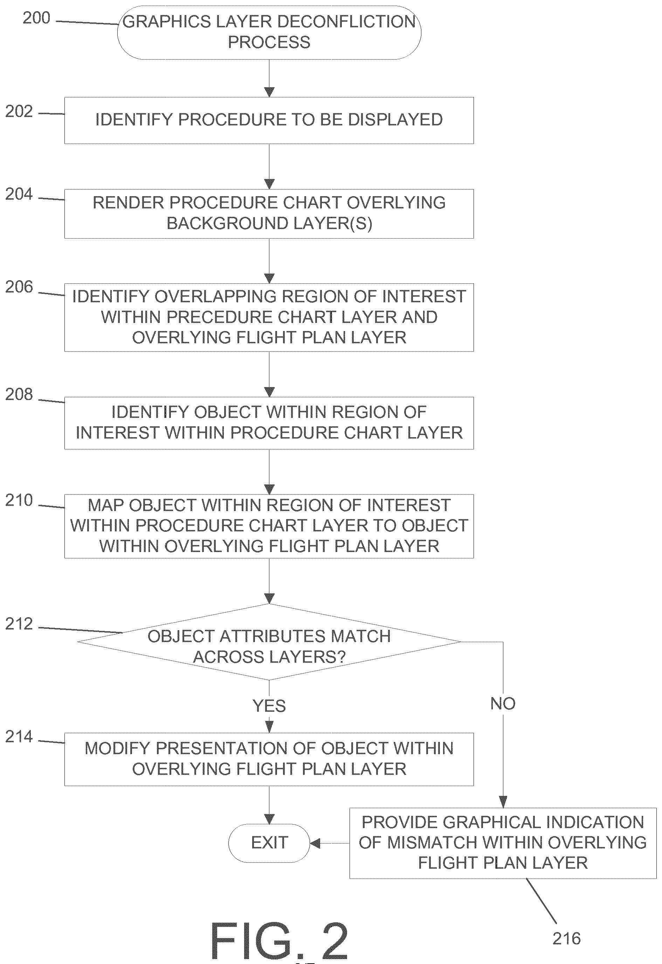

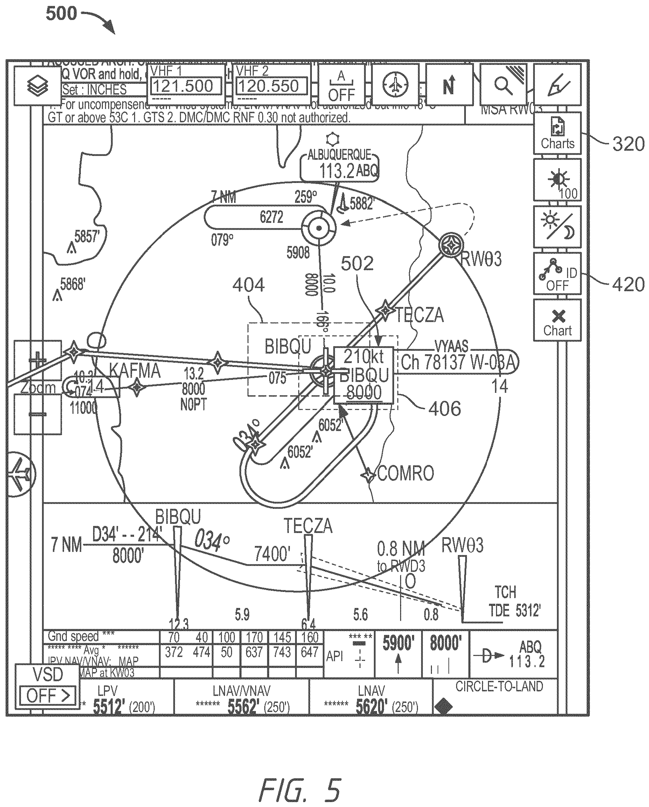

As described in greater detail below in the context of FIGS. 2-7, in one or more exemplary implementations, the subject matter described herein is utilized to deconflict a procedure chart graphics layer from other graphics layers concurrently presented on a navigational map, such as, for example an overlying flight plan graphics layer. In some implementations, the procedure chart graphics layer may be realized as a raster layer that includes a raster image of pixels depicting a procedure chart to be rendered as overlaid on top of an underlying terrain background graphics layer, with a flight plan graphics layer to be rendered as a vector layer including vector graphics objects to be rendered as overlaid on top of the procedure chart graphics layer and the underlying terrain background graphics layer. In this regard, one or more geographic locations or other geographic anchor points associated with the procedure chart may be utilized to align the procedure chart raster image with the underlying terrain background graphics layer such that the same geographic location within each respective graphics layer is collocated at the same pixel address or other location on the navigational map GUI display.

To deconflict the procedure chart graphics layer from the flight plan graphics layer, color sampling, edge detection or other image processing techniques may be performed on the pixels of the procedure chart raster image within the procedure chart raster layer to extract or otherwise identify respective subsets of pixels corresponding to discrete objects or other graphical elements of the procedure chart that are depicted at within the procedure chart raster image at respective geographic areas with respect to the navigational map. In this regard, in addition to identifying subsets of pixels corresponding to waypoints, runways, or other navigational reference points associated with respective geographic locations depicted within the procedure chart, identifying information (e.g., a waypoint name), constraints (e.g., an altitude restriction, a speed restriction, and/or the like) and/or other attributes associated with objects in the procedure chart raster layer may also be extracted or otherwise identified from image processing and analysis of the pixels of the procedure chart raster image.

In exemplary implementations, the flight plan graphics layer is also analyzed to identify objects within the flight plan graphics layer that correspond to common objects depicted within the underlying procedure chart graphics layer. In this regard, in some implementations, the flight plan graphics layer may be initially analyzed to identify any vector graphics objects depicted within the geographic area corresponding to the procedure chart to identify a more limited geographic region of interest that encompasses those vector graphics objects overlapping at least a portion of the underlying procedure chart graphics layer. After identifying the overlapping region of interest, the pixels of the procedure chart raster image within that corresponding region of interest are analyzed to extract and identify corresponding objects depicted within the procedure chart graphics layer at respective regions that overlap or otherwise align with the vector graphics within the overlying flight plan graphics layer.

Graphical objects identified within the overlapping region of interest within the lower procedure chart graphics layer are attempted to be mapped, correlated or otherwise matched to a corresponding object within the overlying flight plan graphics layer to identify whether the object to be depicted in the overlying flight plan graphics layer is duplicative, redundant, or otherwise extraneous given the object depicted within the lower procedure chart graphics layer. For example, after identifying a waypoint associated with the procedure that is within the overlapping region of interest identified from the flight plan, such as, for example, a final approach fix (FAF) for an approach procedure that is identified within the approach procedure raster image, the objects within the overlying flight plan graphics layer are analyzed to identify whether that same waypoint is contained within the flight plan graphics layer. In one or more implementations, the graphical objects identified within the flight plan graphics layer are analyzed to identify one or more graphical objects depicted in the flight plan graphics layer within a threshold distance of the particular object depicted in the lower procedure chart layer capable of being mapped to the object depicted in the lower procedure chart layer.

Once an object in the lower procedure chart graphics layer is mapped to an object depicted in the flight plan graphics layer, the respective attributes associated with that common object are compared across the layers to verify or otherwise confirm whether the attributes associated with that object within the respective graphics layers match, comport or otherwise conform with one another. For example, for a FAF waypoint of an approach procedure that is also present in the flight plan graphics layer by virtue of that FAF waypoint and/or approach procedure being part of the flight plan for the aircraft, the altitude, speed and/or other attributes associated with the FAF waypoint within the flight plan graphics layer are compared to the corresponding altitude, speed and/or other attributes associated with the FAF waypoint within the procedure chart graphics layer to verify, validate or otherwise confirm that the flight plan is consistent with the procedure chart. In this regard, if the FAF waypoint is depicted in the procedure chart graphics layer with alphanumeric characters defining an altitude minimum or other altitude constraint for the FAF waypoint, the value of the altitude attribute associated with the FAF waypoint in the flight plan graphics layer is analyzed to verify that the altitude value is greater than or equal to or otherwise satisfies the altitude minimum or other altitude constraint for the FAF waypoint defined within the procedure chart raster image.

When the attributes of a graphical object identified within the upper graphics layer match, conform or otherwise comport with the attributes for the corresponding graphical object identified within the lower graphics layer, presentation of that graphical object within the upper graphics layer is modified to reduce the presence and/or visibility of one or more of those duplicative, redundant or otherwise extraneous attributes within the upper graphics layer to declutter the GUI display. For example, when the altitude attribute associated with the FAF waypoint in the flight plan graphics layer matches or otherwise satisfies the altitude attribute or other altitude criterion associated with the FAF waypoint in the procedure chart graphics layer, the visibility attribute associated with the FAF waypoint and/or the FAF waypoint labels may be modified to be hidden or invisible to remove the graphical representation of the FAF waypoint and/or the FAF waypoint altitude from the flight plan graphics layer. In this regard, once the analysis of the procedure chart graphics layer and the flight plan graphics layer confirms that the attributes of a particular waypoint or other object associated with the flight plan are consistent with the corresponding waypoint or object of the procedure chart, the graphical representation of that waypoint or other object can be hidden or otherwise modified to declutter the navigational map GUI display since that graphical representation has been deconflicted or otherwise validated as duplicative, redundant, extraneous or otherwise unnecessary.

On the other hand, when the attributes of a graphical object identified within the upper graphics layer do not match or conform with the attributes for the corresponding graphical object identified within the lower graphics layer, such that there is a potential conflict or other inconsistency between attributes of a common graphical object across the different graphics layers, presentation of that graphical object within the upper graphics layer may be modified to increase visibility, prominence or other awareness of that graphical object within the upper graphics layer. For example, when the altitude attribute associated with the FAF waypoint in the flight plan graphics layer violates an altitude criterion associated with the FAF waypoint in the procedure chart graphics layer, the color, location, font, styling and/or other graphical attributes associated with the FAF waypoint and/or the FAF waypoint label within the upper flight plan graphics layer may be modified to attract visual attention to the FAF waypoint of in the flight plan graphics layer. In some implementations, the on-screen pixel location of the upper layer attributes my be shifted or relocated so as not to overlap with the attributes depicted in the lower raster layer to allow a pilot or other crew member to make direct comparisons between attributes. In this manner, pilot workload is reduced by allowing a pilot to quickly visually identify the presence of a potential conflict between the flight plan and the procedure chart when briefing the procedure, thereby improving the pilot's situational awareness with respect to the relationship between the flight plan and the approach procedure. Accordingly, by virtue of the subject matter described herein, conflicting or inconsistent information in the upper flight plan graphics layer may be more prominently displayed or indicated, while deconflicted information that has been validated as duplicative, redundant, extraneous or otherwise unnecessary can be hidden, made invisible or otherwise reduced in prominence to declutter the GUI display and improve visibility of the underlying procedure chart graphics layer. As a result, a pilot may more quickly and efficiently brief the procedure chart with reduced workload without requiring the pilot to manually cross-reference the information on the procedure chart with the flight plan.

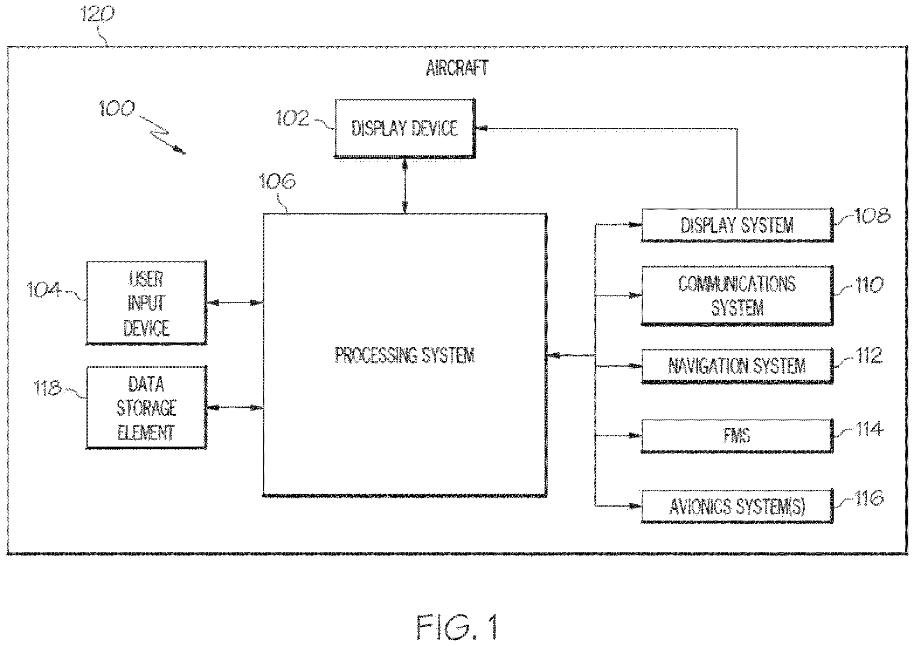

FIG. 1 depicts an exemplary embodiment of an aircraft system 100 which may be utilized with an aircraft 120 to implement the subject matter described herein. In an exemplary embodiment, the system 100 includes, without limitation, a display device 102, one or more user input devices 104, a processing system 106, a display system 108, a communications system 110, a navigation system 112, a flight management system (FMS) 114, one or more avionics systems 116, and a data storage element 118 suitably configured to support operation of the system 100, as described in greater detail below.

In exemplary embodiments, the display device 102 is realized as an electronic display capable of graphically displaying flight information or other data associated with operation of the aircraft 120 under control of the display system 108 and/or processing system 106. In this regard, the display device 102 is coupled to the display system 108 and the processing system 106, and the processing system 106 and the display system 108 are cooperatively configured to display, render, or otherwise convey one or more graphical representations or images associated with operation of the aircraft 120 on the display device 102. The user input device 104 is coupled to the processing system 106, and the user input device 104 and the processing system 106 are cooperatively configured to allow a user (e.g., a pilot, co-pilot, or crew member) to interact with the display device 102 and/or other elements of the system 100, as described in greater detail below. Depending on the embodiment, the user input device(s) 104 may be realized as a keypad, touchpad, keyboard, mouse, touch panel (or touchscreen), joystick, knob, line select key or another suitable device adapted to receive input from a user. In some exemplary embodiments, the user input device 104 includes or is realized as an audio input device, such as a microphone, audio transducer, audio sensor, or the like, which is adapted to allow a user to provide audio input to the system 100 in a "hands free" manner using speech recognition.

The processing system 106 generally represents the hardware, software, and/or firmware components configured to facilitate communications and/or interaction between the elements of the system 100 and perform additional tasks and/or functions to support operation of the system 100, as described in greater detail below. Depending on the embodiment, the processing system 106 may be implemented or realized with a general purpose processor, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. The processing system 106 may also be implemented as a combination of computing devices, e.g., a plurality of processing cores, a combination of a digital signal processor and a microprocessor, a plurality of microprocessors, one or more microprocessors in conjunction with a digital signal processor core, or any other such configuration. In practice, the processing system 106 includes processing logic that may be configured to carry out the functions, techniques, and processing tasks associated with the operation of the system 100, as described in greater detail below. Furthermore, the steps of a method or algorithm described in connection with the embodiments disclosed herein may be embodied directly in hardware, in firmware, in a software module executed by the processing system 106, or in any practical combination thereof. For example, in one or more embodiments, the processing system 106 includes or otherwise accesses a data storage element (or memory), which may be realized as any sort of non-transitory short or long term storage media capable of storing programming instructions for execution by the processing system 106. The code or other computer-executable programming instructions, when read and executed by the processing system 106, cause the processing system 106 to support or otherwise perform certain tasks, operations, functions, and/or processes described herein.

The display system 108 generally represents the hardware, software, and/or firmware components configured to control the display and/or rendering of one or more navigational maps and/or other displays pertaining to operation of the aircraft 120 and/or onboard systems 110, 112, 114, 116 on the display device 102. In this regard, the display system 108 may access or include one or more databases suitably configured to support operations of the display system 108, such as, for example, a terrain database, an obstacle database, a navigational database, a geopolitical database, an airport database, a terminal airspace database, a special use airspace database, or other information for rendering and/or displaying navigational maps and/or other content on the display device 102.

In the illustrated embodiment, the aircraft system 100 includes a data storage element 118, which is capable of storing, maintaining or otherwise implementing one or more of the databases that support operations of the aircraft system 100 described herein. In some embodiments, the data storage element 118 contains aircraft procedure information (or instrument procedure information) for a plurality of airports and maintains associations between the aircraft procedure information and the corresponding airports. Depending on the embodiment, the data storage element 118 may be physically realized using RAM memory, ROM memory, flash memory, registers, a hard disk, or another suitable data storage medium known in the art or any suitable combination thereof. As used herein, aircraft procedure information should be understood as a set of operating parameters, constraints, or instructions associated with a particular aircraft action (e.g., approach, departure, arrival, climbing, and the like) that may be flown or otherwise undertaken by the aircraft 120 at or in the vicinity of a particular airport. An airport should be understood as referring to any sort of location suitable for landing (or arrival) and/or takeoff (or departure) of an aircraft, such as, for example, airports, runways, landing strips, and other suitable landing and/or departure locations, and an aircraft action should be understood as referring to an approach (or landing), an arrival, a departure (or takeoff), an ascent, taxiing, or another aircraft action having associated aircraft procedure information. An airport may have one or more predefined aircraft procedures associated therewith, wherein the aircraft procedure information for each aircraft procedure at each respective airport are maintained by the data storage element 118 in association with one another.

Depending on the embodiment, the aircraft procedure information may be provided by or otherwise obtained from a governmental or regulatory organization, such as, for example, the Federal Aviation Administration in the United States. In an exemplary embodiment, the aircraft procedure information includes instrument procedure information, such as instrument approach procedures, standard terminal arrival routes, instrument departure procedures, standard instrument departure routes, obstacle departure procedures, or the like, traditionally displayed on a published charts, such as Instrument Approach Procedure (IAP) charts, Standard Terminal Arrival (STAR) charts or Terminal Arrival Area (TAA) charts, Standard Instrument Departure (SID) routes, Departure Procedures (DP), terminal procedures, approach plates, and the like. In exemplary embodiments, the data storage element 118 maintains associations between prescribed operating parameters, constraints, and the like and respective navigational reference points (e.g., waypoints, positional fixes, radio ground stations (VORs, VORTACs, TACANs, and the like), distance measuring equipment, non-directional beacons, or the like) defining the aircraft procedure, such as, for example, altitude minima or maxima, minimum and/or maximum speed constraints, RTA constraints, and the like.

In one or more exemplary embodiments described herein, the aircraft procedure information maintained by the data storage element 118 includes raster images of approach plates or other procedure charts that graphically convey the waypoints or other navigational reference points that define the path or course to be flown or traversed in connection with execution of the respective procedure along with additional information, including, but not limited to, altitude constraints, speed constraints, holding patterns, procedure turns, missed approach procedures, approach procedures, obstacles, special use airspace, terminal arrival areas, radio frequencies and/or channels associated with the procedure or airport, and/or the like. In one or more implementations, a third-party data provider may create raster images for particular procedures of interest, where each procedure raster image is stored or otherwise maintained in the data storage element 118 in a portable network graphics file format (e.g., .png) or other suitable raster graphics file format in association with the respective procedure to allow the procedure raster image file to be displayed when the respective procedure is selected for viewing. As described in greater detail below, in exemplary implementations, the procedure chart raster images are capable of being selectively displayed on or overlying a navigational map, where the processing system 106 and/or the display system 108 implements, executes or otherwise supports a procedure chart deconfliction service that is configurable to map objects between the raster image layer and other layers of the navigational map to automatically modify presentation of any matched objects in the other layers to improve visibility and comprehension of the displayed raster image when attributes of those objects match across the different layers to declutter the navigational map display after deconflicting those matched objects.

Still referring to FIG. 1, in exemplary embodiments, the processing system 106 is coupled to the navigation system 112, which is configured to provide real-time navigational data and/or information regarding operation of the aircraft 120. The navigation system 112 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 112, as will be appreciated in the art. The navigation system 112 is capable of obtaining and/or determining the instantaneous position of the aircraft 120, that is, the current (or instantaneous) location of the aircraft 120 (e.g., the current latitude and longitude) and the current (or instantaneous) altitude or above ground level for the aircraft 120. The navigation system 112 is also capable of obtaining or otherwise determining the heading of the aircraft 120 (i.e., the direction the aircraft is traveling in relative to some reference).

In the illustrated embodiment, the processing system 106 is also coupled to the communications system 110, which is configured to support communications to and/or from the aircraft 120. For example, the communications system 110 may support communications between the aircraft 120 and air traffic control or another suitable command center or ground location. In this regard, the communications system 110 may be realized using a radio communication system and/or another suitable data link system. In this regard, various embodiments of the communications system 110 include hardware and/or other components configured to support data link communications to/from the aircraft 120 using a data link infrastructure and/or a data link service provider. For example, the communications system 110 may include or otherwise be realized as a Controller Pilot Data Link Communications (CPDLC) system, an Aircraft Communication Addressing and Reporting System (ACARS) system, an Automatic Dependent Surveillance (ADS) broadcast system or another system suitable for communicating messages over a communications network, such as the Internet, a satellite network, a cellular network, or the like.

In exemplary embodiments, the processing system 106 is also coupled to the FMS 114, which is coupled to the navigation system 112, the communications system 110, and one or more additional avionics systems 116 to support navigation, flight planning, and other aircraft control functions in a conventional manner, as well as to provide real-time data and/or information regarding the operational status of the aircraft 120 to the processing system 106. Although FIG. 1 depicts a single avionics system 116, in practice, the system 100 and/or aircraft 120 will likely include numerous avionics systems for obtaining and/or providing real-time flight-related information that may be displayed on the display device 102 or otherwise provided to a user (e.g., a pilot, a co-pilot, or crew member). For example, practical embodiments of the system 100 and/or aircraft 120 will likely include one or more of the following avionics systems suitably configured to support operation of the aircraft 120: a weather system, an air traffic management system, a radar system, a traffic avoidance system, an autopilot system, an autothrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system.

It should be understood that FIG. 1 is a simplified representation of the system 100 for purposes of explanation and ease of description, and FIG. 1 is not intended to limit the application or scope of the subject matter described herein in any way. It should be appreciated that although FIG. 1 shows the display device 102, the user input device 104, and the processing system 106 as being located onboard the aircraft 120 (e.g., in the cockpit), in practice, one or more of the display device 102, the user input device 104, and/or the processing system 106 may be located outside the aircraft 120 (e.g., on the ground as part of an air traffic control center or another command center) and communicatively coupled to the remaining elements of the system 100 (e.g., via a data link and/or communications system 110). Similarly, in some embodiments, the data storage element 118 may be located outside the aircraft 120 and communicatively coupled to the processing system 106 via a data link and/or communications system 110. Furthermore, practical embodiments of the system 100 and/or aircraft 120 will include numerous other devices and components for providing additional functions and features, as will be appreciated in the art. In this regard, it will be appreciated that although FIG. 1 shows a single display device 102, in practice, additional display devices may be present onboard the aircraft 120. Additionally, it should be noted that in other embodiments, features and/or functionality of processing system 106 described herein can be implemented by or otherwise integrated with the features and/or functionality provided by the FMS 114 and/or the display system 108. In other words, some embodiments may integrate the processing system 106 with the FMS 114 and/or the display system 108. In yet other embodiments, various aspects of the subject matter described herein may be implemented by or at an electronic flight bag (EFB) or similar electronic device that is communicatively coupled to the processing system 106 and/or the FMS 114.

FIG. 2 depicts an exemplary embodiment of a graphics layer deconfliction process 200 suitable for implementation by the aircraft system 100 to concurrently present a procedure chart on or overlying a navigational map. The various tasks performed in connection with the illustrated process may be implemented using hardware, firmware, software executed by processing circuitry, or any combination thereof. For illustrative purposes, the following description may refer to elements mentioned above in connection with FIG. 1. In practice, portions of the graphics layer deconfliction process 200 may be performed by different elements of a vehicle system. That said, exemplary embodiments are described herein in the context of the graphics layer deconfliction process 200 being primarily performed by a procedure chart deconfliction service implemented at the processing system 106 and/or the display system 108. It should be appreciated that the graphics layer deconfliction process 200 may include any number of additional or alternative tasks, the tasks need not be performed in the illustrated order and/or the tasks may be performed concurrently, and/or the graphics layer deconfliction process 200 may be incorporated into a more comprehensive procedure or process having additional functionality not described in detail herein. Moreover, one or more of the tasks shown and described in the context of FIG. 2 could be omitted from a practical embodiment of the graphics layer deconfliction process 200 as long as the intended overall functionality remains intact.

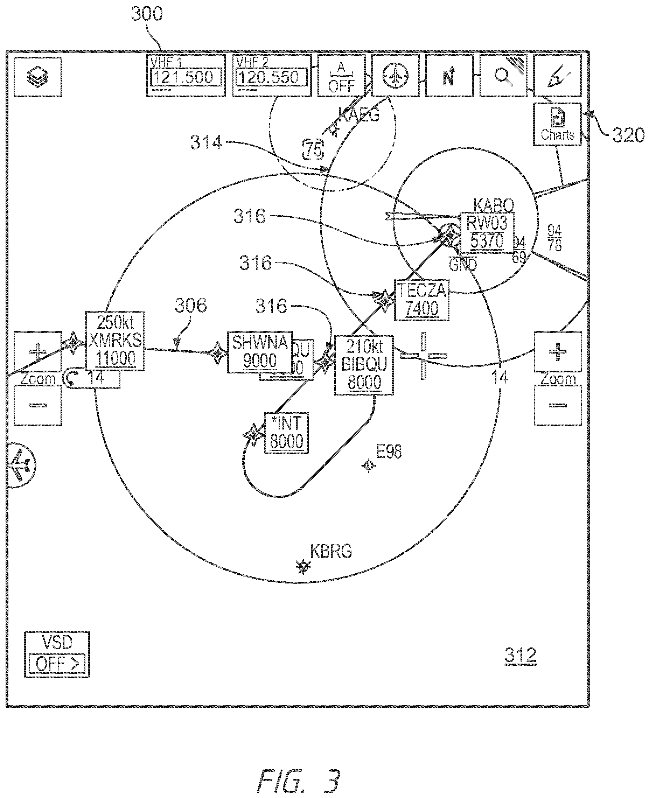

Referring to FIG. 3 with continued reference to FIGS. 1-2, in exemplary implementations, the graphics layer deconfliction process 200 is performed in connection with display of an aircraft procedure on or overlying navigational map GUI display depicting at least a portion of a current flight plan of the aircraft. In this regard, FIG. 3 depicts an exemplary navigational map graphical user interface (GLTI) display 300 that may be displayed, rendered, or otherwise presented by the processing system 106 and/or display system 108 as a flight deck display on a display device 102 onboard an aircraft 120. In this regard, FIG. 3 depicts a state of the GUI display 300 prior to selection of a procedure chart for presentation. The navigational map 300 includes a graphical representation of a portion of the route 306 defined by a flight plan for the aircraft 120, where the graphical representation of the route 306 is overlaid or rendered on top of a background 312, which is generally realized as a graphical representation of the terrain, topology, navigational reference points, airspace designations and/or restrictions, or other suitable items or points of interest corresponding to the currently displayed area of the navigational map GUI display 300, which may be maintained in a terrain database, a navigational database, a geopolitical database, or another suitable database. For example, the display system 108 may render a graphical representation of the waypoints or other navigational aids (e.g., VORs, VORTACs, DMEs, and the like) of the flight plan that are within the currently displayed geographic area of the navigational map GUI display 300 and corresponding navigational route segments between the those waypoints of the current flight plan overlying the background 312. In practice, the navigational map GUI display 300 may also include graphical representations of airspace designations and/or airspace restrictions, cities, towns, roads, railroads, and other geopolitical information. It should be noted that although FIG. 3 depicts a top view (e.g., from above the aircraft) of the navigational map GUI display 300 (alternatively referred to as a lateral map or lateral view), in practice, alternative embodiments may utilize various perspective views, such as side views, three-dimensional views (e.g., a three-dimensional synthetic vision display), angular or skewed views, and the like.

In one or more exemplary embodiments, the navigational map GUI display 300 is associated with the movement of the aircraft 120, where background 312 refreshes or otherwise updates as the aircraft 120 travels, such that a graphical representation of the aircraft may be positioned over the terrain background 312 in a manner that accurately reflects the current (e.g., instantaneous or substantially real-time) real-world positioning of the aircraft 120 relative to the earth. In some embodiments, the aircraft symbology is shown as traveling across the navigational map GUI display 300 (e.g., by updating the location of the aircraft symbology with respect to the background 312), while in other embodiments, the aircraft symbology may be located at a fixed position on the navigational map GUI display 300 (e.g., by updating the background 312 with respect to the aircraft symbology such that the navigational map GUI display 300 is maintained centered on and/or aligned with the aircraft symbology). For purposes of explanation, the subject matter is described herein primarily in the context of an implementation where the navigational map GUI display 300 is oriented in a cardinal direction (e.g., oriented north-up so that moving upward on the navigational map GUI display 300 corresponds to traveling northward); however, in alternative implementations, the orientation of the navigational map GUI display 300 may be track-up or heading-up (i.e., aligned such that the aircraft symbology is always traveling in an upward direction and the background 312 adjusted accordingly).

In one or more exemplary implementations, the navigational map GUI display 300 includes multiple different graphics layers that are stacked, merged or otherwise combined to arrive at the navigational map GUI display 300 depicted on the display device 102. For example, the terrain background 312 may be realized as a topographic map image that is rendered or otherwise defined using a scalable vector graphics (SVG) format or other vector image format that maintains an association between topography and geographic location. The designated airspace symbology 314 may similarly be rendered or otherwise defined using a SVG or other vector image format within another vector graphics layer that overlies the terrain background vector graphics layer, with the graphical representation of the route segments of the flight plan 306 and corresponding waypoint symbology 316 or other graphical representations of navigational reference points associated with the current flight plan being rendered or otherwise defined within another vector graphics layer that similarly overlies the terrain background vector graphics layer and the airspace vector graphics layer and other underlying graphics layers, such as a waypoint vector graphics layer, a navigation aid (NAVAID) object layer, an airway layer, a geopolitical boundary layer, a visual reference point layer, one or more roadway layers, and/or the like. An upper vector graphics layer overlying the flight plan graphics layer, the terrain background vector graphics layer, the airspace vector graphics layer, and/or the like may include interactive GUI elements, including, but not limited to, a selectable GUI element 320 for viewing procedure chart information on the navigational map GUI display 300.

Referring again to FIG. 2, with continued reference to FIGS. 1 and 3, in exemplary implementations, the graphics layer deconfliction process 200 initializes or otherwise begins by identifying or otherwise determining the aircraft procedure to be displayed on or overlying a navigational map depicting at least a portion of a current flight plan of the aircraft (task 202). For example, as shown in FIG. 3, the navigational map GUI display 300 may include a button or similar selectable GUI element 320 which is manipulable by a pilot, co-pilot or other user to indicate a desire to view a procedure chart on the navigational map GUI display 300. In this regard, in some implementations, the graphics layer deconfliction process 200 may automatically identify a procedure associated with the current flight plan (e.g., a planned approach procedure) for presentation, while in other implementations, the processing system 106 and/or the display system 108 may be configurable to provide a drop-down menu, a picklist or another suitable GUI element for selecting an aircraft procedure associated with the current destination airport and/or departure airport for the current flight plan.

In response to identifying a selected aircraft procedure to be displayed, the graphics layer deconfliction process 200 automatically updates the navigational map GUI display to render a graphical representation of the procedure chart for the selected aircraft procedure overlying the background of the navigational map GUI display (task 204). In this regard, in one or more exemplary implementations, the processing system 106 and/or the display system 108 automatically identifies the geographic location associated with the selected aircraft procedure and corresponding geographic area encompassing the procedure chart for the selected aircraft procedure and then automatically updates the geographic area depicted within the navigational map GUI display 300 to be centered on the procedure chart (e.g., by aligning the geographic location for the geometric center of the navigational map GUI display 300 with the geographic location of the geometric center of the procedure chart) and scaled to encompass the procedure chart such that the entire procedure chart can be depicted on the navigational map GUI display 300 before rendering the procedure chart. After dynamically updating the center location and/or scale (or range) of the navigational map GUI display, in exemplary implementations, the raster image of the procedure chart for the selected aircraft procedure is rendered as a separate graphics layer overlying the displayed graphics layer that includes the terrain background.

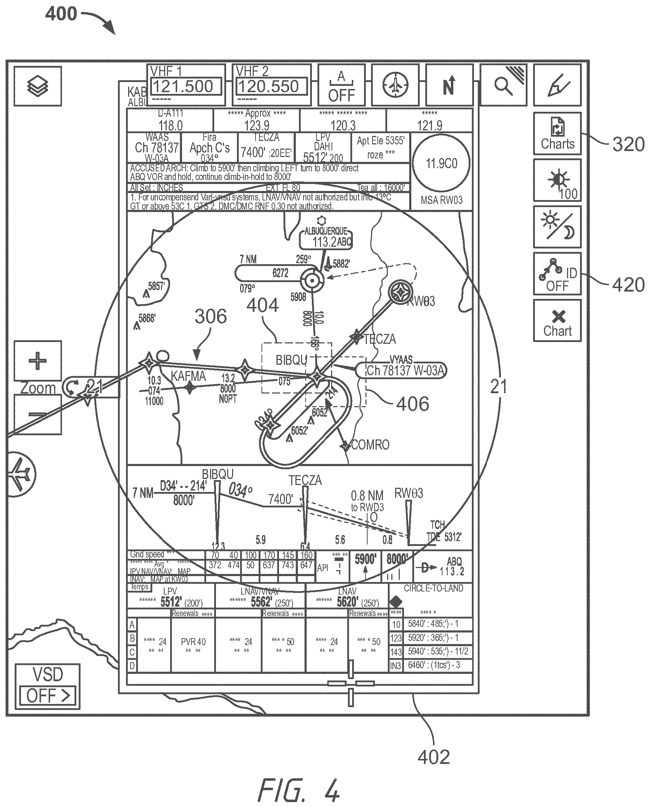

For example, FIG. 4 depicts an updated navigational map GUI display 400 corresponding to an updated state of the navigational map GUI display 300 in response to selection of the procedure chart button 320. As illustrated, the center location of the navigational map GUI display 300 is dynamically updated to correspond to the geographic location of the geometric center of the depicted procedure chart raster image 402, and the range (or scale or zoom) of the navigational map GUI display 300 is dynamically updated (e.g., from 21 nautical miles to 14 nautical miles) to encompass or otherwise fit the displayed geographic area of the updated navigational map GUI display 400 to the longest dimension of the procedure chart raster image 402. After updating the location and scale of the navigational map GUI display 300, the processing system 106 and/or the display system 108 automatically updates the terrain background 312 in a corresponding manner to reflect the current display settings for the updated navigational map GUI display 400 before rendering the procedure chart raster image 402 for the selected aircraft procedure overlying the terrain background 312. In exemplary implementations, the procedure chart raster image 402 is rendered as a raster image graphics layer that overlies one or more additional graphics layers, such as, for example, the terrain background vector graphics layer, the airspace vector graphics layer that includes graphical representations of any designated airspaces within the currently displayed geographic area (e.g., the airspace symbology 314), and/or the like.

Referring again to FIG. 2, after selection of a procedure chart to be displayed, the graphics layer deconfliction process 200 automatically identifies an overlapping region of interest between the procedure chart graphics layer and an overlying flight plan graphics layer within the procedure chart graphics layer and then analyzes the overlapping region of interest within the procedure chart graphics layer to identify one or more objects depicted within the region of interest of the procedure chart graphics layer (tasks 206 and 208). The graphics layer deconfliction process 200 analyzes the identified objects within the region of interest of the procedure chart graphics layer relative to the overlying flight plan graphics layer to map or otherwise correlate a depicted object within the region of interest of the procedure chart graphics layer to a corresponding object to be rendered within the overlying flight plan graphics layer (task 210). After mapping one or more objects depicted in the lower procedure chart graphics layer to corresponding correlated objects in the overlying flight plan graphics layer, for each depicted object within the procedure chart graphics layer that is mapped to a corresponding object within the overlying flight plan graphics layer, the graphics layer deconfliction process 200 analyzes the respective attributes associated with those objects within the respective graphics layers to verify or otherwise confirm that the attributes of a common object match across the different graphics layers (task 212).

When the attributes associated with mapped objects match, the graphics layer deconfliction process 200 modifies presentation of the mapped object in the upper graphics layer to improve visibility of the object in the lower graphics layer or otherwise declutter the display (task 214). In one or more implementations, when an object in the upper flight plan graphics layer has associated attributes in the context of the current flight plan that match or otherwise correspond to the attributes associated with that mapped object within the procedure chart graphics layer, the processing system 106 and/or the display system 108 automatically modifies a visibility attribute associated with the mapped object in the upper flight plan graphics layer by setting the visibility attribute value to invisible. As a result, the mapped object is inhibited from presentation overlying the procedure chart raster image within the upper flight plan graphics layer, thereby improving visibility of the mapped object within the procedure chart raster image. For example, setting the visibility attribute value to invisible may automatically hide a label or other symbology or graphics associated with a mapped waypoint within the upper flight plan graphics layer to improve visibility of the waypoint or attributes associated with the waypoint within the procedure chart raster image. It should be noted that although the subject matter may be described herein in the context of modifying visibility for purposes of explanation, the graphics layer deconfliction process 200 is not limited to modifying visibility, and in various implementations, the graphics layer deconfliction process 200 may automatically modify the location, orientation, color, transparency and/or other graphical characteristics associated with the mapped object in an upper graphics layer.

Still referring to FIG. 2, when the attributes associated with mapped objects do not match, conflict or are otherwise inconsistent, the graphics layer deconfliction process 200 automatically provides graphical indication of a potential mismatch associated with the mapped object within the overlying graphics layer to focus visual attention on the potential mismatch (task 216). In this regard, the graphics layer deconfliction process 200 may render a label or other symbology or graphics associated with the mapped object within the upper flight plan graphics layer adjacent to or overlying the mapped object within the lower procedure chart graphics layer to attract visual attention to the mapped object and display, highlight, or otherwise present the mismatched attribute(s). For example, if the current flight plan defines an altitude value associated with a particular waypoint associated with an approach procedure that fails to satisfy or otherwise conflicts with an altitude criterion for that waypoint depicted in the underlying procedure chart raster image, the processing system 106 and/or the display system 108 may automatically generate, render or otherwise provide a label adjacent to the location of the waypoint within the flight plan graphics layer to depict the mismatched altitude value for that waypoint concurrently to depicting the graphical representation of the waypoint and its corresponding altitude criterion within the underlying procedure chart raster image.

By virtue of the graphics layer deconfliction process 200, when a procedure chart is selected for presentation on a navigational map GUI display, presentation of the mapped objects in the overlying flight plan graphics layer having associated attributes that match or otherwise correspond to the respective objects in the procedure chart graphics layer may be automatically modified to hide or remove symbology or information that may be duplicative, redundant or otherwise extraneous to declutter the navigational map GUI display and improve visibility of the procedure chart. At the same time, any mapped objects in the overlying flight plan graphics layer having associated attributes that conflict or are otherwise inconsistent with the respective objects in the procedure chart graphics layer may be graphically indicated to attract visual attention and improve situational awareness with respect to a potential conflict or mismatch between the current flight plan and the displayed procedure chart. As a result, a pilot, co-pilot or other user may more efficiently brief an upcoming procedure with improved situational awareness to resolve any mismatches between the current flight plan maintained by the FMS and the planned procedure before attempting to fly the procedure.

FIGS. 3-6 depict an exemplary sequence of navigational map GUI displays 300, 400, 500, 600 suitable for presentation by the processing system 106 and/or the display system 108 in connection with an exemplary implementation of the graphics layer deconfliction process 200 when the mapped objects between the procedure chart graphics layer and the overlying flight plan graphics layer match one another. As described above, in response to selection of the button 320 to view the approach procedure associated with the current flight plan, the navigational map GUI display 300 is automatically updated to depict the procedure chart raster image 402 for the RNAV (GPS) Y Runway 03 approach procedure. To identify an overlapping region of interest for analysis (e.g., task 206), in an exemplary implementation, the graphics layer deconfliction process 200 utilizes the portion of the route defined by the current flight plan that is within the geographic area of the procedure chart raster image 402 to identify an initial subset of pixels of the procedure chart raster image for analysis that are within a threshold distance of the current flight plan. Thereafter, the graphics layer deconfliction process 200 performs color sampling (e.g., using pixel values for edge detection and the like), shape sampling (e.g., using a template to look for a similar shape based on aspect ratio or other geometric characteristics or shape factors) or other image processing techniques to analyze the pixels within that initial subset of pixels to extract respective subset of pixels corresponding to objects depicted within the geographic area of the overlapping region of interest within a threshold distance of the current flight plan route, such as, for example, the waypoint symbol for waypoint BIBQU, the waypoint identifier label for waypoint BIBQU, the waypoint symbol for waypoint TECZA, the waypoint identifier label for waypoint TECZA, an altitude minimum of 7400 feet for the route segment between waypoint BIBQU and waypoint TECZA, and/or the like. For example, a waypoint identifier in the flight plan graphics layer can be used to generate an image search template to be correlated with regions of interests in the procedure chart raster image 402 that are within a threshold distance of the flight plan route. When a matching region of the raster image area is identified within a threshold distance of the flight plan route using the image search template, that corresponding subset of pixels of the procedure chart raster image 402 that were matched to the image search template can be designated as the respective subset of pixels corresponding to the object associated with that waypoint identifier (or other identifier associated with the search template derived from the flight plan graphics layer).

For each object subset of pixels identified within the procedure chart raster image 402, the graphics layer deconfliction process 200 analyzes respective subsets of pixels within the overlying flight plan graphics layer to extract or otherwise identify a respective subset of pixels within the overlying flight plan graphics layer associated with a vector graphics object that is within a threshold distance of an identified object depicted in the procedure chart raster image 402. For example, after identifying an object pixel subset 404 encompassing the waypoint symbol and associated label for the waypoint BIBQU within the procedure chart raster image 402, the graphics layer deconfliction process 200 may extract a corresponding object subset of pixels encompassing the waypoint symbol and associated label for the waypoint BIBQU within the flight plan graphics layer, represented as region 406 in FIG. 4. In this regard, the flight plan graphics layer object pixel subset 406 for the waypoint BIBQU overlaps or is otherwise within a threshold distance of the procedure chart layer object pixel subset 404 for the waypoint BIBQU.

After identifying respective object subsets of pixels across the overlapping layers that are in vicinity of one another, the graphics layer deconfliction process 200 performs optical character recognition or image processing techniques to extract or otherwise identify, from the respective object subsets of pixels respective values for different attributes for the object associated with the respective object subset of pixel. For example, for a subset of pixels encompassing waypoint symbology, the graphics layer deconfliction process 200 may further extract the displayed name or identifier associated with that waypoint, an altitude criterion associated with that waypoint, a speed criterion associated with the waypoint, and/or the like. For example, referring again to FIG. 4, the graphics layer deconfliction process 200 may extract the waypoint name identifier attribute value of "BIBQU" from the procedure chart layer object pixel subset 404 and extract the waypoint name identifier attribute value of "BIBQU" and the altitude value of "8000" from the flight plan graphics layer object pixel subset 406. Thereafter, the graphics layer deconfliction process 200 attempts to validate the mapping between the object pixel subsets 404, 406 by matching the extracted attribute values across the different graphics layers. In this regard, the graphics layer deconfliction process 200 may verify that both object pixel subsets 404, 406 include the common attribute value of "BIBQU" that matches across the different graphics layers. Additionally, in some implementations, the graphics layer deconfliction process 200 may verify that extracted altitude criterion value of "8000" from the flight plan graphics layer object pixel subset 406 matches or otherwise satisfies any altitude criteria associated with that particular waypoint and/or location on the procedure chart raster image, for example, by verifying the extracted altitude criterion value of "8000" matches or otherwise satisfied a value associated with an entry for the BIBQU waypoint in an airport database or procedure database for the selected procedure, or a value depicted for the BIBQU waypoint at another location on the procedure chart raster image 402 (e.g., within the vertical profile portion of the procedure chart).

As shown in FIG. 4, in response to determining the extracted attribute values for the BIBQU waypoint in the flight plan graphics layer matches the extracted attribute values for the BIBQU waypoint in the procedure chart raster image 402, the graphics layer deconfliction process 200 automatically modifies the visibility setting attribute for the BIBQU waypoint label object in the flight plan graphics layer to automatically hide or otherwise remove, from the updated navigational map GUI display 400, the waypoint label 502 for the BIBQU waypoint from presentation within the overlying flight plan graphics layer on the updated navigational map GUI display 400 (e.g., is_visible = false). This allows the pilot, co-pilot or other user to view the depiction of the BIBQU waypoint and corresponding labels associated therewith within the underlying region 404 of the procedure chart raster image 402 without obstruction or obfuscation by duplicative information in the overlying flight plan graphics layer. In response to a pilot, co-pilot or other user navigating a cursor, pointer, mouse or other GUI element associated with user input within the respective region 406 of the updated navigational map GUI display 400 in the vicinity of the BIBQU waypoint, the graphics layer deconfliction process 200 may automatically and temporarily modify the visibility setting attribute for the BIBQU waypoint label object in the flight plan graphics layer (e.g., is_visible = true) to automatically render and display the flight plan waypoint label 502 for the BIBQU waypoint while the cursor or other user input element is maintained within the overlapping region 406 of the navigational map GUI display 500.

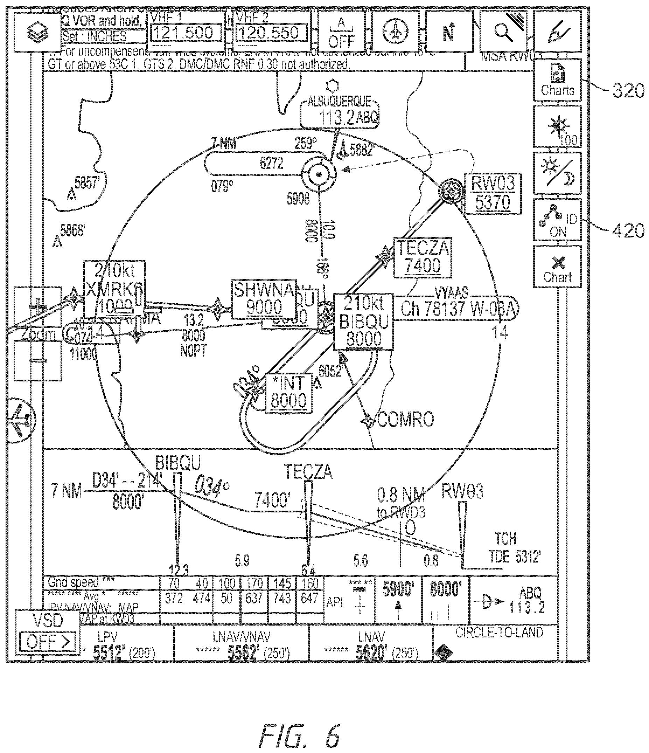

FIGS. 4-6 depict exemplary navigational map GUI displays 300, 400, 500, 600 where the mapped objects between the procedure chart graphics layer and the overlying flight plan graphics layer are all verified and validated as matching one another, such that the navigational map GUI displays 300, 400, 500, 600 only include the graphical representation of the route segments of the flight plan route 306 and corresponding waypoint symbols are rendered or presented as visible within the overlying flight plan graphics layer, thereby allowing the pilot, co-pilot or other user to view the information on the underlying procedure chart raster image 402 without obstruction or obfuscation by the overlying flight plan graphics layer other than the flight plan route segments and waypoint symbols that comport with the procedure chart raster image 402. As shown in FIG. 6, in response to a selection of a button or similar GUI element to show the flight plan, the graphics layer deconfliction process 200 may automatically modify the visibility setting attributes associated with all of the objects identified within the region of interest within the flight plan graphics layer to render or otherwise display the waypoint labels and potentially objects within the flight plan graphics layer overlying the procedure chart raster image 402.

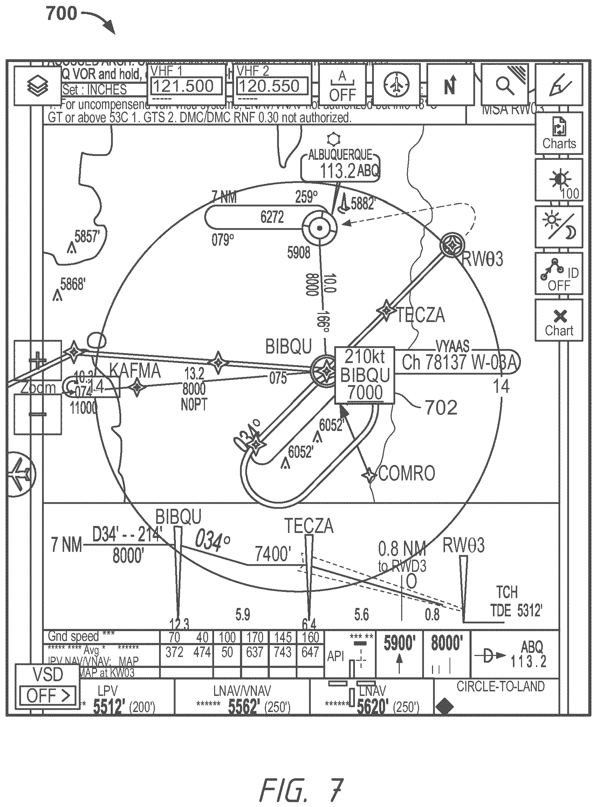

FIG. 7 depicts an exemplary navigational map GUI display 700 that may be presented in a sequence after the initial state of the navigational map GUI display 300 of FIG. 3 in response to selection of the button 320 to view the approach procedure associated with the current flight plan when an extracted altitude criterion value from the flight plan graphics layer object pixel subset 406 does not match or otherwise conflicts with a corresponding altitude attribute for that particular waypoint, object or other geographic location within the procedure chart raster image 402. For example, when the extracted altitude value from the flight plan graphics layer object pixel subset 406 is equal to "7000," the graphics layer deconfliction process 200 may determine that the extracted altitude value of 7000 does not satisfy and violates the altitude minimum of 8000 defined for the BIBQU waypoint for the selected procedure (e.g., based on the vertical profile of the procedure chart raster image 402 and/or the procedure database), the graphics layer deconfliction process 200 may automatically set the visibility setting attribute for the BIBQU waypoint label object in the flight plan graphics layer (e.g., is_visible = true) to automatically render and display the flight plan waypoint label 702 for the BIBQU waypoint that includes conflicting information on the navigational map GUI display 700.

By presenting the waypoint label 702 with conflicting information within the overlying flight plan graphics layer while automatically hiding the labels for the other waypoints within the flight plan graphics layer where the flight plan matches the selected procedure, the visual attention of the pilot, co-pilot or other user viewing the procedure chart raster image 402 may be drawn towards the conflicting information for further review and analysis when briefing the procedure. In some implementations, the graphics layer deconfliction process 200 may automatically modify one or more other attributes or settings associated with the conflicting waypoint label 702 to render the conflicting waypoint label 702 with one or more visually distinguishable characteristics (e.g., a color, animation, bolding, opacity, font or font style and/or the like) to graphically indicate there was a potential mismatch detected between concurrently displayed graphics layers at that particular location or region of the navigational map GUI display 700. In this manner, the graphics layer deconfliction process 200 deconflicts and declutters the navigational map GUI display when the procedure chart raster image 402 and the graphical representation of the flight plan route 306 are displayed concurrently while ensuring any potentially conflicting or mismatching information between the displayed procedure chart and the current flight plan is notified or otherwise alerted to the attention of the pilot, co-pilot or other user briefing the procedure chart.

For the sake of brevity, conventional techniques related to aircraft procedures, avionics systems, FMSs, flight planning, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of non-transitory storage medium known in the art. An exemplary storage medium is coupled to the processor such that the processor can read information from, and write information to, the storage medium. In the alternative, the storage medium may be integral to the processor. The processor and the storage medium may reside in an ASIC.

The subject matter may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is logically coherent.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of deconflicting different graphics layers for concurrent presentation on a display device, the method comprising:
analyzing an upper layer of the different graphics layers to identify a region of interest overlapping at least a portion of a lower layer of the different graphics layers;
analyzing the portion of the lower layer to identify one or more objects depicted in the lower layer;
mapping a first object of the one or more objects depicted in the lower layer to a second object in the upper layer; and
modifying presentation of the second object in the upper layer when a first set of one or more attributes associated with the first object in the lower layer match a second set of one or more attributes associated with the second object in the upper layer.

2. The method of claim 1, wherein analyzing the upper layer comprises identifying the region of interest corresponding to a geographic area associated with the lower layer.

3. The method of claim 2, wherein analyzing the portion of the lower layer comprises color sampling the geographic area within the lower layer to extract a first subset of pixels corresponding to the first object depicted within the geographic area.

4. The method of claim 3, further comprising analyzing the first subset of pixels to identify the first set of one or more attributes associated with the first object.

5. The method of claim 4, further comprising analyzing a second subset of pixels corresponding to the second object in the upper layer to identify the second set of one or more attributes associated with the second object.

6. The method of claim 3, wherein mapping the first object comprises identifying the second object in the upper layer within a threshold distance of the first object depicted in the lower layer.

7. The method of claim 2, wherein analyzing the portion of the lower layer comprises shape sampling the geographic area within the lower layer to extract a first subset of pixels corresponding to the first object depicted within the geographic area.

8. The method of claim 1, wherein modifying presentation of the second object in the upper layer comprises automatically setting a visibility attribute associated with the second object to invisible.

9. The method of claim 1, wherein:
the lower layer comprises a procedure chart associated with a procedure for an aircraft;
the upper layer comprises a graphical representation of a flight plan for the aircraft;
the first object comprises a waypoint associated with the procedure; and
the second object comprises a graphical representation of the waypoint associated with the graphical representation of the flight plan, wherein the flight plan comprises the waypoint.

10. The method of claim 9, wherein modifying presentation of the second object in the upper layer comprises hiding a label associated with the graphical representation of the waypoint associated with the graphical representation of the flight plan.

11. The method of claim 9, wherein:
the lower layer comprises a raster image of the procedure chart;
the graphical representation of the flight plan comprises a plurality of vector graphics objects within the upper layer;
the first object comprises a first subset of pixels within the raster image; and
the second object comprises a second subset of pixels comprising a vector graphics object of the plurality of vector graphics objects within a threshold distance of the first subset of pixels.

12. A computer-readable medium having computer-executable instructions stored thereon that, when executed by a processing system, cause the processing system to:
analyze an upper layer of a plurality of different graphics layers concurrently presented on a display device to identify a region of interest overlapping at least a portion of a lower layer of the different graphics layers;
analyze the portion of the lower layer to identify one or more objects depicted in the lower layer;
map a first object of the one or more objects depicted in the lower layer to a second object in the upper layer; and
modify presentation of the second object in the upper layer when a first set of one or more attributes associated with the first object in the lower layer match a second set of one or more attributes associated with the second object in the upper layer.

13. The computer-readable medium of claim 12, wherein:
the lower layer comprises a procedure chart associated with a procedure for an aircraft;
the upper layer comprises a graphical representation of a flight plan for the aircraft;
the first object comprises a waypoint associated with the procedure; and
the second object comprises a graphical representation of the waypoint associated with the graphical representation of the flight plan, wherein the flight plan comprises the waypoint.

14. The computer-readable medium of claim 12, wherein:
the lower layer comprises a raster image of the procedure chart;
the graphical representation of the flight plan comprises a plurality of vector graphics objects within the upper layer;
the first object comprises a first subset of pixels within the raster image; and
the second object comprises a second subset of pixels comprising a vector graphics object of the plurality of vector graphics objects within a threshold distance of the first subset of pixels.

15. A system comprising:
a procedure database maintaining a raster image for an aircraft procedure;
a flight management system (FMS) to maintain a flight plan for an aircraft;
a display device; and
a processing system coupled to the display device, the FMS and the procedure database to provide a graphics layer deconfliction service configurable to:
analyze a flight plan graphics layer to identify a region of interest overlapping at least a portion of the raster image concurrently presented within a procedure chart graphics layer on the display device;
analyze the portion of the procedure chart graphics layer to identify a first object depicted in the raster image;
map the first object depicted in the raster image to a second object in the flight plan graphics layer; and
modify presentation of the second object in the flight plan graphics layer when a first set of one or more attributes associated with the first object in the raster image match a second set of one or more attributes associated with the second object in the flight plan graphics layer.
